# EUROPÄISCHE PATENTSCHRIFT

(11) **EP 2 354 769 B1**
(45) Veröffentlichungstag und Bekanntmachung des Hinweises auf die Patenterteilung: **01.04.2015**
(21) Anmeldenummer: 10001102.2
(22) Anmeldetag: 03.02.2010
(51) Int. Cl.: G01D 5/14

(54) **Winkelgeber und Verfahren zur Bestimmung eines Winkels zwischen einer Sensoranordnung und einem Magnetfeld**
Angle encoder and method for determining an angle between a sensor assembly and a magnetic field
Capteur angulaire et procédé de détermination d'un angle entre un agencement de capteurs et un champ magnétique

(43) Veröffentlichungstag der Anmeldung: 10.08.2011
(73) Patentinhaber: Micronas GmbH, 79108 Freiburg (DE)
(72) Erfinder: Hunger, Norbert, 79108 Freiburg (DE)
(74) Vertreter: Koch Müller Patentanwaltsgesellschaft mbH

(56) Entgegenhaltungen:
- WO-A2-2007/077389
- US-A1- 2005 275 399

## Beschreibung

Die Erfindung betrifft einen Winkelgeber zur Bestimmung eines Winkels zwischen einer Sensoranordnung und einem Magnetfeld, mit einem das Magnetfeld erzeugenden, bezüglich einer Drehachse in unterschiedliche Drehlagen relativ zu der Sensoranordnung verstellbaren Magneten, wobei die Sensoranordnung einen ersten Magnetfeldsensor zur Erfassung einer quer zur Drehachse orientierten ersten Magnetfeldkomponente und einen zweiten Magnetfeldsensor zur Erfassung einer zweiten Magnetfeldkomponente aufweist, die quer zu einer von der Drehachse und der ersten Magnetfeldkomponente aufgespannten Ebene angeordnet ist. Außerdem bezieht sich die Erfindung auf ein Verfahren zur Bestimmung eines Winkels zwischen einer Sensoranordnung und einem um eine Drehachse relativ zu der Sensoranordnung verdrehbaren Magnetfeld, wobei die Sensoranordnung bereitgestellt und das Magnetfeld erzeugt wird, wobei mit Hilfe der Sensoranordnung ein erster Messwert für eine quer zur Drehachse orientierte erste Magnetfeldkomponente und einen zweiten Messwert zur Erfassung einer zweiten Magnetfeldkomponente aufweist, die quer zu einer von der Drehachse und der ersten Magnetfeldkomponente aufgespannten Ebene angeordnet, und wobei mit Hilfe der Messwerte der Winkel zwischen der Sensoranordnung und dem Magnetfeld bestimmt wird.

Ein derartiger Winkelgeber und ein derartiges Verfahren sind aus der WO 96 / 16316 bekannt. Weitere Anordnungen sind in der US 2005 / 275 399 A1 und der WO 2007 / 077389 A2 offenbart. Bei der WO 96 / 16316 hat der Winkelgeber eine Magnetscheibe, die an einer Halterung um eine Drehachse drehbar gelagert und konzentrisch zur Drehachse angeordnet ist. An ihrem Umfang weist die Magnetscheibe Magnetpole auf, die in Umfangsrichtung zueinander versetzt sind. In Richtung der Drehachse neben bzw. unter Magnetscheibe ist ein Halbleiterchip angeordnet, der mit seiner Chipebene normal zur Drehachse und parallel zu der Ebene der Magnetscheibe ausgerichtet ist. In den Halbleiterchip sind zwei Magnetfeldsensoren integriert, deren Messachsen in der Chipebene liegen und um 90° zueinander versetzt sind. Mit Hilfe der Magnetfeldsensoren werden Magnetfeldkomponenten für die x- und y-Komponente einer Stelle des Magnetfelds gemessen, die sich auf oder benachbart der Drehachse befindet. In den Halbleiterchip ist eine Auswerteeinrichtung integriert, die aus den so erhaltenen Magnetfeldkomponenten mit Hilfe einer Arcus-Tangensfunktion den Winkel zwischen der Sensoranordnung und dem Magnetfeld ermittelt und ein entsprechendes Winkelmesssignal erzeugt. Der Winkelgeber hat den Nachteil, dass durch mechanische Toleranzen und/oder Toleranzen in der Magnetisierung des Magneten, eine Abweichung zwischen der Messstelle der Sensoranordnung und der Drehachse des Magnetfelds auftreten können. Dadurch können bei der Winkelmessung nichtlineare Messfehlern auftreten.

Aufgabe der Erfindung ist es, einen Winkelgeber der eingangs genannten Art zu schaffen, der bei der Montage der Sensoranordnung am Magneten auf einfache Weise derart justiert werden kann, dass er eine hohe Messgenauigkeit ermöglicht. Fernen besteht die Aufgabe, ein Verfahren der eingangs genannten Art zu schaf fen, das auf einfache Weise eine präzise Messung des Winkels zwischen einer Sensoranordnung und dem Magnetfeld ermöglicht.

Diese Aufgabe wird bezüglich des Winkelgebers dadurch gelöst, dass die Sensoranordnung einen dritten Magnetfeldsensor zur Erfassung einer in Richtung der Drehachse orientierten dritten Magnetfeldkomponente aufweist.

In vorteilhafter Weise ist es durch den dritten Magnetfeldsensor möglich, bei der Montage des Winkelgebers die in Richtung der Drehachse weisende Komponente des Magnetfelds zu messen und die Sensoranordnung derart relativ zu dem Magnetfeld zu positionieren, dass bei einer Drehbewegung des Magneten bzw. des Magnetfelds die in Richtung der Drehachse weisende dritte Magnetfeldkomponente weitestgehend konstant ist. Die Sensoranordnung ist dann genau auf der magnetischen Drehachse und somit symmetrisch zum Magnetfeld positioniert. Der auf diese Weise justierte Winkelgeber ermöglicht eine hohe Messgenauigkeit

Bei einer vorteilhaften Ausführungsform der Erfindung ist die Sensoranordnung in ein Halbleitersubstrat integriert, wobei der erste Magnetfeldsensor und der zweite Magnetfeldsensor jeweils mindestens eine vertikale, quer zur Ebene des Halbleitersubstrats angeordnete Hall-Platte und der dritte Magnetfeldsensor wenigstens eine parallel Ebene des Halbleitersubstrats oder in der Ebene des Halbleitersubstrats angeordnete horizontale Hall-Platte aufweist. Die Magnetfeldsensoren können dadurch kostengünstig in das Halbleitersubstrat integriert werden. Aufwöndige Flussleitkörper, die den magnetischen Fluss umlenken, werden vermieden.

Vorteilhaft ist, wenn der Flächenschwerpunkt der mindestens einen vertikalen Hall-Platte des ersten Magnetfeldsensors mit dem Flächenschwerpunkt der mindestens einen vertikalen Hall-Platte des zweiten Magnetfeldsensors übereinstimmt. Die erste und die zweite Magnetfeldkomponente können dann am selben Messort gemessen werden.

Bei einer bevorzugten Ausgestaltung der Erfindung durchdringt die vertikale Hall-Platte des ersten Magnetfeldsensors die vertikale Hall-Platte des zweiten Magnetfeldsensors. Für die beiden Hall-Platten wird dann nur eine relativ kleine Chipfläche benötigt.

Bei einer vorteilhaften Ausführungsform der Erfindung liegen in der Aufsicht auf die Erstreckungsebene des Halbleitersubstrats der Flächenschwerpunkt der horizontalen Hall-Platte und der Flächenschwerpunkt der vertikalen Hall-Platte des ersten Magnetfeldsensors und/oder zweiten Magnetfeldsensors übereinander. Der Winkelgeber ermöglicht dadurch eine noch größere Messgenauigkeit.

Vorteilhaft ist, wenn der dritte Magnetfeldsensor einen analogen Messsignalausgang für die dritte Magnetfeldkomponente aufweist, wenn auf dem Halbleiterchip ein Temperatursensor mit einem analogen Temperatursignalausgang angeordnet ist, und wenn der Messsignalausgang und der Temperatursignalausgang über eine Schalteinrichtung wahl- oder wechselweise mit einem Eingang eines Analog-Digital-Konverters verbindbar sind. Somit kann der Analog-Digital-Konverter zum Digitalisieren der dritten Magnetfeldkomponente und des Temperatursignals genutzt werden. Ein Digitalausgang des Analog-Digital-Konverters kann zur Weiterverarbeitung der Messsignale mit einer digitalen Signalprozessorstufe verbunden sein. Mit Hilfe des Temperatursignals kann die Temperaturabhängigkeit der Messsignale für die Magnetfeldkomponenten kompensiert oder abgeschwächt werden.

Bei einer zweckmäßigen Ausgestaltung der Erfindung ist der Magnet mittels einer Lagerung relativ zu der Sensoranordnung um die Drehachse verdrehbar gelagert, wobei zwischen der Lagerung und der Sensoranordnung eine Verstellvorrichtung angeordnet ist, mittels der die Drehachse in Richtung der ersten Magnetfeldkomponente und in Richtung der zweiten Magnetfeldkomponente relativ zu der Sensoranordnung verstellbar ist. Mit Hilfe der Verstellvorrichtung kann die Sensoranordnung bei der Montage des Winkelgebers auf einfache Weise auf der magnetischen Drehachse des Magnetfelds positioniert werden. Bei Bedarf kann die Verstellvorrichtung eine zusätzliche Stellachse aufweisen, mittels welcher der Magnet in Richtung der dritten Magnetfeldkomponente relativ zu der Sensoranordnung verstellbar ist. Selbstverständlich ist es aber auch möglich, eine Verstellvorrichtung an einer Fertigungsanlage vorzusehen und die Sensoranordnung nach der lagerichtigen Positionierung an dem Magneten an einer Halterung für den Magneten zu fixieren, beispielsweise mit Hilfe von Klebstoff.

Bezüglich des Verfahrens der eingangs genannten Art wird die vorstehend genannte Aufgabe dadurch gelöst,
a) dass ein Messsignal für eine in Richtung der Drehachse orientierte dritte Magnetfeldkomponente in Abhängigkeit von der Drehlage erfasst wird,
b) dass die Schwankung des Messsignals ermittelt und mit einem Sollwert oder Sollwertbereich verglichen wird,
c) dass für den Fall, dass die Schwankung nicht mit dem Sollwert oder Sollwertbereich übereinstimmt,
   i) die Sensoranordnung quer zu der Drehachse relativ zu dem Magnetfeld verschoben wird,
   ii) und danach die Schritte a) bis c) wiederholt werden,
d) und dass für den Fall, dass die Schwankung mit dem Sollwert oder Sollwertbereich übereinstimmt, der erste und der zweite Messwert erfasst und mit Hilfe der Messwerte der Winkel zwischen der Sensoranordnung und dem Magnetfeld bestimmt wird.

Dabei wird unter einer Schwankung insbesondere der Unterschied zwischen dem größten und dem kleinsten Wert des Messsignals verstanden. Der Erfindung liegt die Erkenntnis zu Grunde, dass die dritte Magnetfeldkomponente beim Verdrehen des Magnetfelds um eine Drehachse konstant bleibt, wenn der dritte Magnetfeldsensor und damit die Sensoranordnung auf der Drehachse angeordnet ist. Wenn die bei der Drehbewegung auftretende Schwankung der dritte Magnetfeldkomponente außerhalb des vorgegebenen Sollwertbereichs liegt oder nicht mit dem vorgegebenen Sollwert übereinstimmt, wird die Sensoranordnung solange quer zu der Drehachse relativ zu dieser verschoben, bis die Schwankung innerhalb des Sollwertbereichs liegt oder mit dem Sollwert übereinstimmt und somit die Messstelle der Sensoranordnung bis auf eine zulässige Toleranz an die Drehachse angenähert ist.

Bei einer bevorzugten Ausgestaltung des Verfahrens
- wird, wenn die Drehachse und der Sensoranordnung in einer ersten Relafivposition angeordnet sind, ein erstes Messsignal für die dritte Magnetfeldkomponente in Abhängigkeit von der Drehlage erfasst und die Schwankung des ersten Messsignals wird ermittelt,
- wird die Sensoranordnung in einer ersten Richtung relativ zu der Drehachse positioniert und in eine weiter Relativposition gebracht,
- wird für die weitere Relativposition ein weiteres Messsignal für die dritte Magnetfeldkomponente in Abhängigkeit von der Drehlage erfasst und die Schwankung dieses Messsignals ermittelt,
- wird die Änderung zwischen Schwankung des zuletzt erfassten Messsignals und der Schwankung des zuvor erfassten Messsignals bestimmt,
- wobei die drei letzten Schritte solange wiederholt werden, bis die Änderung der Schwankung ihr Vorzeichen ändert,
- und wobei danach die Schritte a) bis d) derart durchgeführt werden, dass die Verschiebung in Schritt i) in einer zweiten Richtung erfolgt die rechtwinklig zur ersten Richtung und echtwinklig zu Drehachse orientiert ist.

Die Sensoranordnung wird also zunächst in der ersten und danach in der zweiten Richtung relativ zu der magnetischen Drehachse ausgerichtet. Dadurch wird eine schnelle und genaue Positionierung der Sensoranordnung auf der Drehachse ermöglicht.

Die erste Magnetfeldkomponente und die zweite Magnetfeldkomponente liegen bevorzugt in einer normal zu Drehachse angeordneten Ebene und sind rechtwinklig zueinander ausgerichtet. Die Magnetfeldkomponenten entsprechen dann den Achsen eines kartesischen Koordinatensystems. Dies ermöglicht eine einfache und schnelle Justierung des Winkelgebers. Außerdem kann der Winkel durch Bildung des Arcustangens aus dem Quotient der ersten und zweiten Magnetfeldkomponente und/oder mit Hilfe des sogenannten CORDIC-Algorithmus mit relativ geringem Rechenaufwand aus der ersten und zweiten Magnetfeldkomponente ermittelt werden.

Nachfolgend ist ein Ausführungsbeispiel der Erfindung anhand der Zeichnung näher erläutert. Es zeigt zum Teil stärker schematisiert:
- Fig. 1: einen Winkelgeber zur Bestimmung eines Winkels zwischen einer in einen Halbleiterchip integrierten Sensoranordnung und einem um eine Drehachse verdrehbaren Magnetfeld, wobei die Messstelle der Sensoranordnung seitlich von der Drehachse beabstandet ist,
- Fig. 2: ein Blockschaltbild einer in den Halbleiterchip integrierten Schaltung,
- Fig. 3: Messsignale eines für die x-Komponente des Magnetfelds empfindlichen Magnetfeldsensors der Sensoranordnung, wobei auf der Abszisse der Winkel in Grad und auf der Ordinate die gemessene x-Komponente des 13, Magnetfelds in Millitesla aufgetragen sind,
- Fig. 4: Messsignale eines für die y-Komponente des Magnetfelds empfindlichen Magnetfeldsensors der Sensoranordnung, wobei auf der Abszisse der Winkel zwischen der Sensoranordnung und dem Magnetfeld in Grad und auf der Ordinate die gemessene y-Komponente des Magnetfelds B_{y} in Millitesla aufgetragen sind,
- Fig. 5: eine graphische Darstellung eines Winkelfehlers im Messsignal der Winkelgebers, der auftritt, wenn die Messstelle der Sensoranordnung von der Drehachse des Magnetfelds radial beabstandet ist,
- Fig. 6: eine Darstellung ähnlich Fig. 1, wobei jedoch die Messstelle der Sensoranordnung auf der magnetischen Drehachse angeordnet ist, und
- Fig. 7: eine graphische Darstellung ähnlich Fug. 5, wobei jedoch die Messstelle der Sensoranordnung auf der magnetischen Drehachse angeordnet ist.

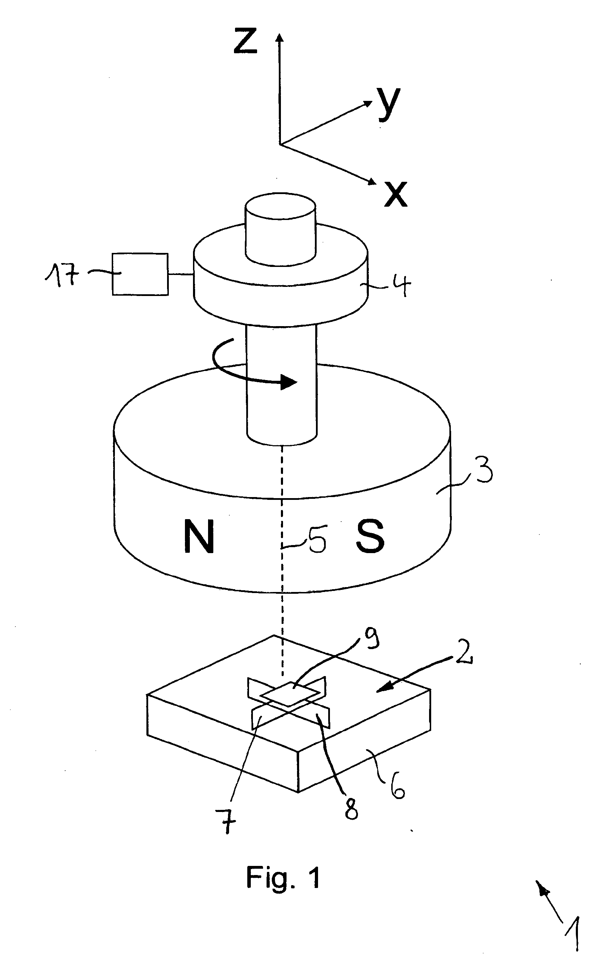

Ein im Ganzen mit 1 bezeichneter Winkelgeber zur Bestimmung eines Winkels zwischen einer Sensoranordnung 2 und einem Magnetfeld weist zum Erzeugen des Magnetfelds einen kreisscheibenförmigen Magneten 3 auf Der Magneten 3 ist mit Hilfe einer Lagerung 4 um eine mechanische Drehachse 5 verdrehbar gelagert. In Fig. 1 ist erkennbar, dass die Drehachse 5 mit der z-Achse eines kartesischen Koordinatensystems übereinstimmt.

Der Magnet 3 ist rechtwinklig zu der Drehachse 5 magnetisiert und weist an seinem Umfang einen Nord- und einen Südpol auf, die bezüglich der Drehachse 5 um 180° zueinander versetzt sind. Aufgrund von Fertigungstoleranzen ist die Symmetrieachse des Magnetfelds seitlich etwas von der Drehachse 5 beabstandet.

Es sind aber auch andere Ausgestaltungen des Magneten 3 denkbar, bei denen dieser an seinem Umfang mehrere Polpaare aufweist In Umfangsrichtung wechseln sich dabei Nord- und Südpole einander ab.

Zur Messung des Magnetfelds hat die Sensoranordnung 2 einen Halbleiterchip mit einem Halbleitersubstrat 6, in das Magnetfeldsensoren 7, 8, 9 integriert sind. Ein erster Magnetfeldsensor 7 ist für eine erste, in x-Richtung des Koordinatensystems orientierte Magnetfeldkomponente empfindlich. Ein zweiter Magnetfeldsensor 8 ist für eine zweite, in y-Richtung des Koordinatensystems orientierte Magnetfeldkomponente und ein dritter Magnetfeldsensor 9 ist für eine dritte, in z-Richtung des Koordinatensystems orientierte Magnetfeldkomponente empfindlich. Die erste und zweite Magnetfeldkomponente sind rechtwinklig zueinander und rechtwinklig zur mechanischen Drehachse 5 angeordnet.

Wie in Fig. 1 erkennbar ist, weisen der erste Magnetfeldsensor 6 und der zweite Magnetfeldsensor 7 jeweils eine vertikale Hallplatte auf Die Hallplatten sind um 180° bezüglich der Normalen auf die Erstreckungsebene des Halbleitersubstrats 6 zueinander verdreht und durchdringen sich mittig. Es auch denkbar, dass die vertikalen Hallplatten in z-Richtung übereinander angeordnet sind und sich mittig kreuzen. Die vertikalen Hallplatten können auch zwei oder mehr Plattenelemente aufneisen, die in einer Ebene angeordnet und radial zur Drehachse 5 voneinander beabstandet sind.

Der dritte Magnetfeldsensor 9 weist eine horizontale Hall-Platte auf, die über den vertikalen Hallplatten angeordnet ist. Der Flächenschwerpunkt der horizontale HallPlatte ist auf oder in gerader Verlängerung der Schnittlinie der vertikalen Hallplatten angeordnet.

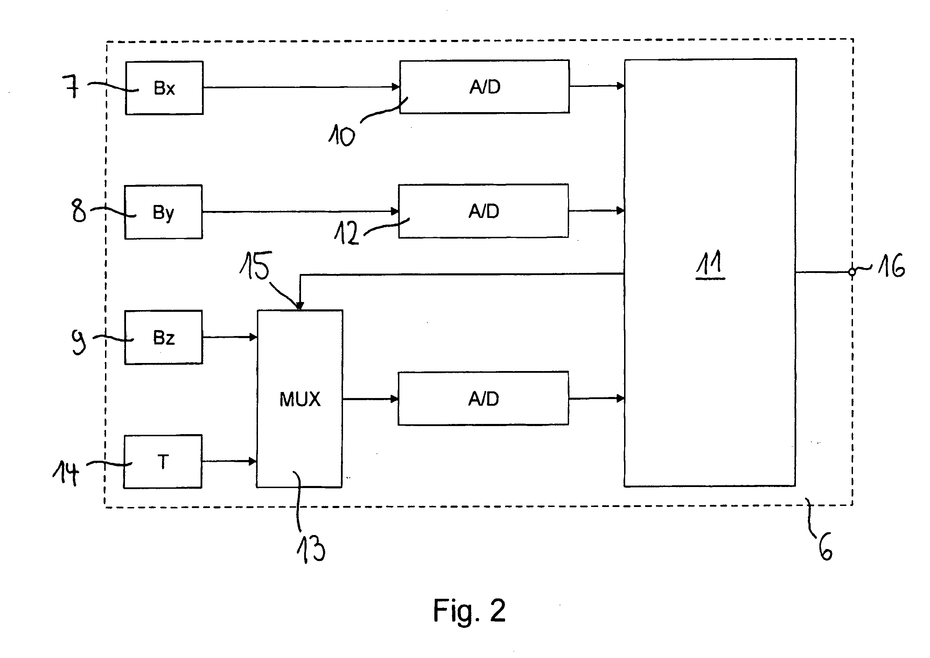

In Fig. 2 ist erkennbar, dass der erste Magnetfeldsensor 7 einen ersten Messsignalausgang hat, der über einen ersten Analog-Digital-Konverter 10 mit einem ersten Digitaleingang eines Signalprozessors 11 verbunden ist. In entsprechender Weise hat der zweite Magnetfeldsensor 8 einen zweiten Messsignalausgang, der über einen zweiten Analog-Digital-Konverter 12 mit einem zweiten Digitaleingang des Signalprozessors 11 verbunden ist.

Der dritte Magnetfeldsensor 9 weist einen dritten Messsignalausgang auf, der mit einem ersten Eingang einer Schalteinrichtung 13 verbunden ist. An einem zweiten Eingang der Schalteinrichtung 13 ist ein Temperatursignalausgang eines in das Halbleitersubstrat 6 integrierten Temperatursensors 14 angeschlossen. Ein Ausgangsanschluss der Schalteinrichtung 13 3 ist mit einem dritten Digitaleingang des Signalprozessors 11 verbunden. Mit Hilfe der Schalteinrichtung 13 können der Messsignalausgang des dritten Magnetfeldsensors 9 und der Temperatursignalausgang des Temperatursensors 14 wechselweise mit dem dritten Digitaleingang des Signalprozessors 11 verbunden werden. Die Auswahl des entsprechenden Eingangs erfolgt über ein Adressierungssignal, das der Signalprozessors 11 über eine Adressleitung an einen Adresssignaleingang 15 der Schalteinrichtung 13 anlegt.

Zwischen der Lagerung 4 und der Sensoranordnung ist eine Verstellvorrichtung 17 angeordnet ist, mittels der die Drehachse 5 zumindest in Richtung der ersten Magnetfeldkomponente und in Richtung der zweiten Magnetfeldkomponente relativ zu der Sensoranordnung 2 verstellbar ist.

Bei der Fertigung des Winkelgebers 1 wird die Sensoranordnung 2 mittels einer in der Zeichnung nicht näher dargestellten Halterung derart im Magnetfeld des Magneten 3 positioniert, dass sich die Messstelle der Sensoranordnung 2 an einer vorbestimmten Seite der magnetischen Drehachse mit Abstand zu dieser befindet (Fig. 1 Die magnetische Drehachse kann aufgrund von Montage- und/oder Magnetisierungstoleranzen etwas von der mechanischen Drehachse 5 abweichen und insbesondere parallel zu dieser versetzt sein.

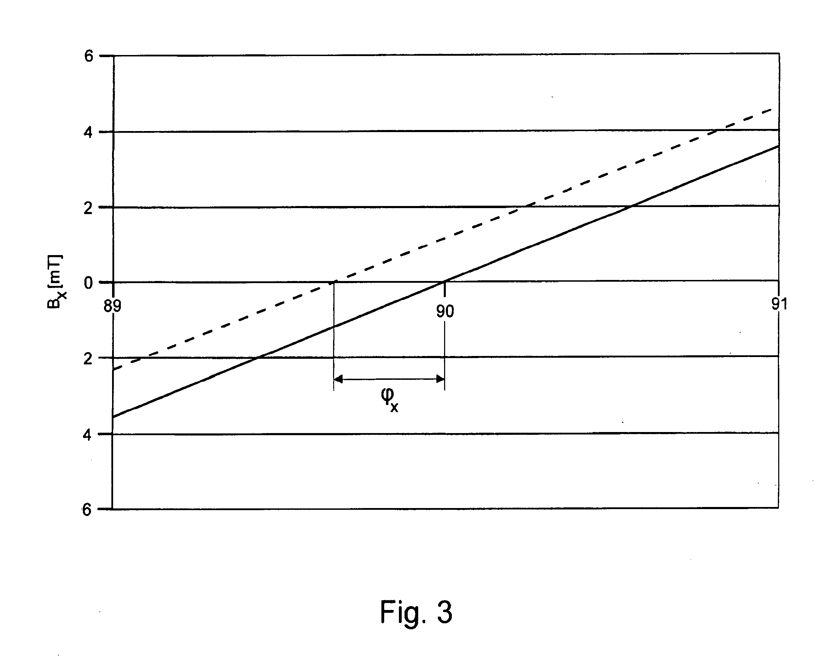

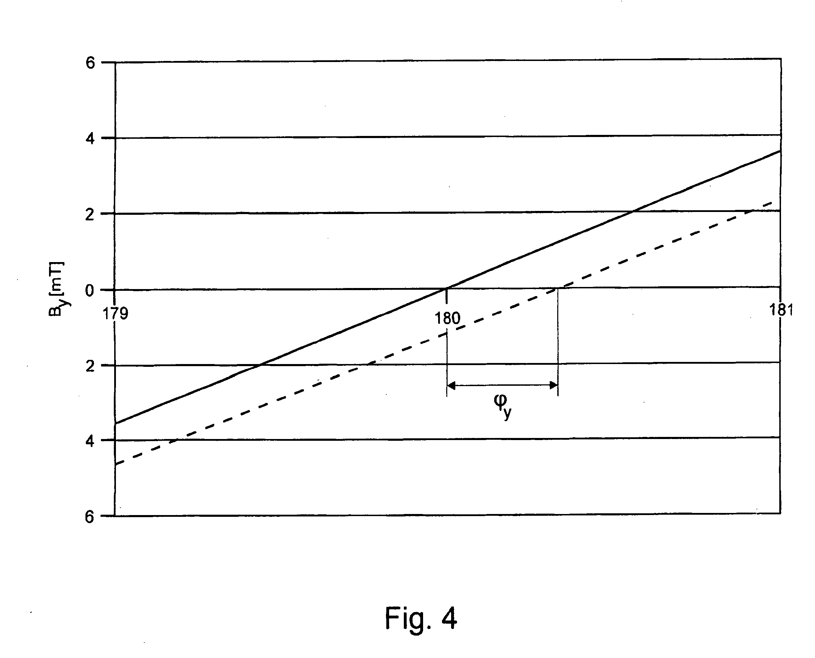

Wie in Fig. 3 und 4 erkennbar ist, ergibt sich durch diese Fehlpositionierung der Sensoranordnung 2 bei der ersten und zweiten Magnetfeldkomponente jeweils ein Phasenfehler ϕₓ bzw. ϕ_{y} der im Wesentlichen sinus- bzw. cosinusförmigen Messsignale. In Fig. 3 ist das mit dem Phasenfehler behaftete Messsignal der ersten Magnetfeldkomponente im Bereich des Nulldurchgangs strichliniert und das entsprechende fehlerfreie Messsignal ist durch eine durchgezogene Linie dargestellt. In entsprechender Weise ist in Fig. 4 der Phasenfehler ϕ_{y} für die zweite Magnetfeldkomponente dargestellt. Zu diesen Phasenfehlern addieren sich noch Amplitudenfehler, auf die in Fig. 3 und 4 nicht näher eingegangen wird.

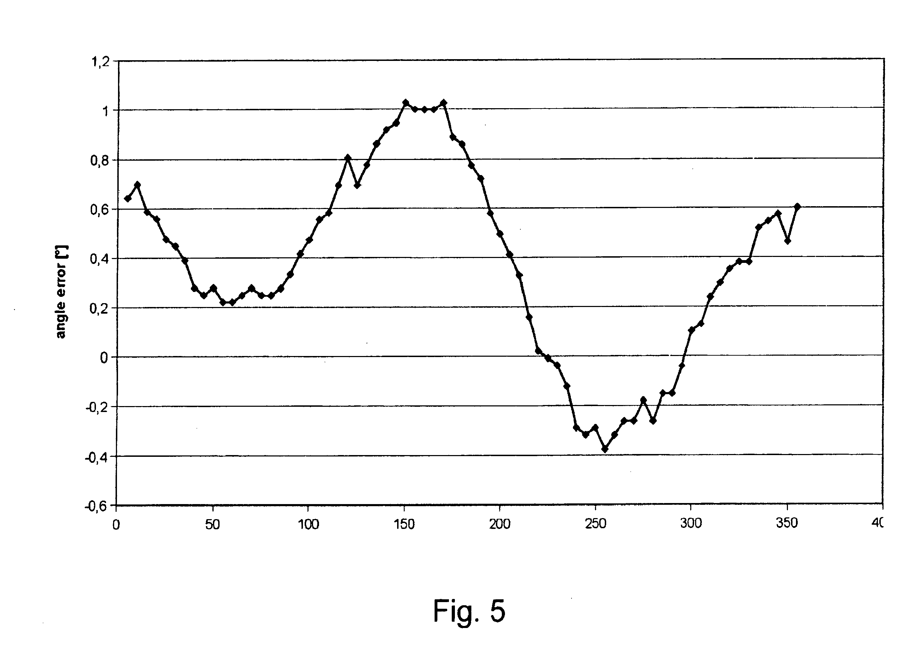

Würde aus den fehlerhaften Magnetfeldkomponenten mit Hilfe einer Arcustangens-Operation oder mit Hilfe des CORDIC-Algorithmus der Winkel zwischen der Sensoranordnung 2 und dem Magnetfeld bestimmt werden, wäre das Winkelsignal mit einem nichtlinearen Winkelfehler behaftet, der in Fig. 5 beispielhaft dargestellt ist.

Um einen solchen Winkelfehler zu vermeiden, wird vor der Durchführung der eigentlichen Winkelmessung die Lage der Sensoranordnung 2 relativ zur magnetischen Drehachse justiert Diese Justierung erfolgt bevorzugt bei der Montage des Winkelgebers 1. Die Justierung kann aber auch zu einem späteren Zeitpunkt durchgeführt oder wiederholt werden.

In einem ersten Verfahrensschritt wird in der Relativposition, in welche die Sensoranordnung 2 zuvor gebracht wurde, ein erstes Messsignal für die in Richtung der Drehachse 5 orientierte dritte Magnetfeldkomponente in Abhängigkeit von der Drehlage erfasst. Dazu wird der Magnet 3 um die Drehachse 5 in Drehbewegung versetzt, während die dritte Magnetfeldkomponente gemessen und aufgezeichnet wird. Dann wird die Schwankung des ersten Messsignals ermittelt, indem die Differenz zwischen dem größten und dem kleinsten Wert des Messsignals errechnet wird. Ggf kann das erste Messsignal zuvor gefiltert werden, um eventuell darin enthaltene Störungen zu glätten oder zu entfernen.

In einem zweiten Verfahrensschritt wird die die Sensoranordnung 2 in einer ersten Richtung auf die Drehachse 5 zu bewegt und in eine weitere Relativposition gebracht.

In einem dritten Verfahrensschritt wird für die weitere Relativposition ein weiteres Messsignal für die dritte Magnetfeldkomponente in Abhängigkeit von der Drehlage erfasst. In entsprechender Weise wie bei dem ersten Messsignal wird für das weitere Messsignal die Schwankung ermittelt.

In einem vierten Verfahrensschritt wird die Änderung zwischen der Schwankung des zuletzt erfassten weiteren Messsignals und der Schwankung des zuvor erfassten ersten Messsignals bestimmt

In einem fünften Verfahrensschritt werden unter Beibehaltung der Richtung, in der die Sensoranordnung 2 relativ zur magnetischen Drehachse bewegt wird, die Verfahrensschritte zwei bis vier solange wiederholt, bis die die Änderung der Schwankung der Messsignale ihr Vorzeichen ändert oder gleich Null ist.

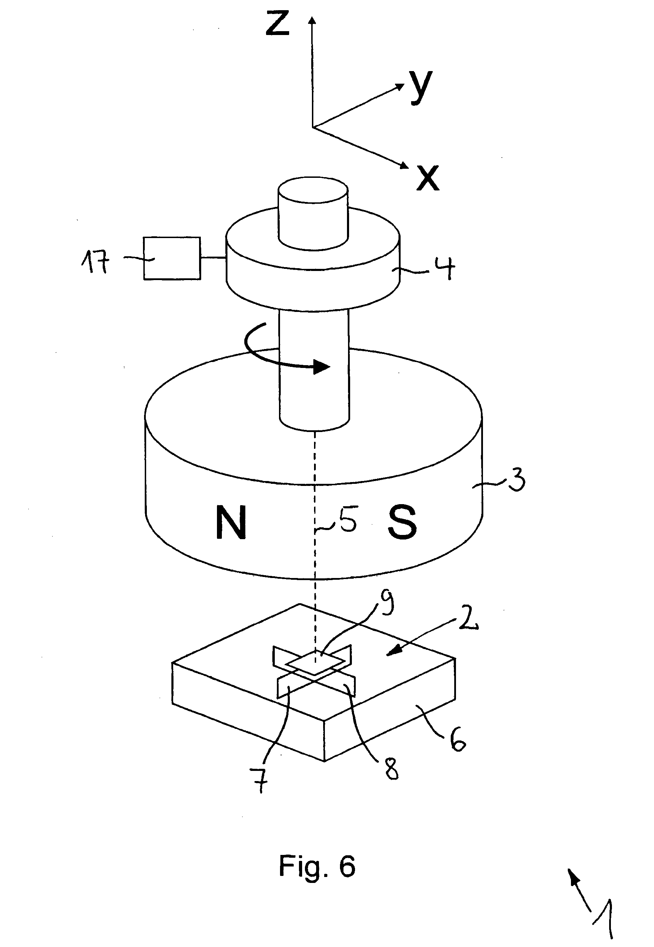

Ausgehend von der so erhaltenen Relativposition werden die Verfahrensschritte eins bis fünf in entsprechender Weise wiederholt, wobei jedoch die Sensoranordnung 2 in Verfahrensschritt zwei einer zweiten Richtung auf die Drehachse zu bewegt wird, die rechtwinklig zu der ersten Richtung und rechtwinklig zur Drehachse 5 verläuft. Wenn in Verfahrensschritt fünf die Änderung der Schwankung der Messsignale ihr Vorzeichen ändert oder gleich Null ist, befindet sich die Messstelle der Sensoranordnung 2 auf oder dicht benachbart der magnetischen Drehachse (Fig. 6).

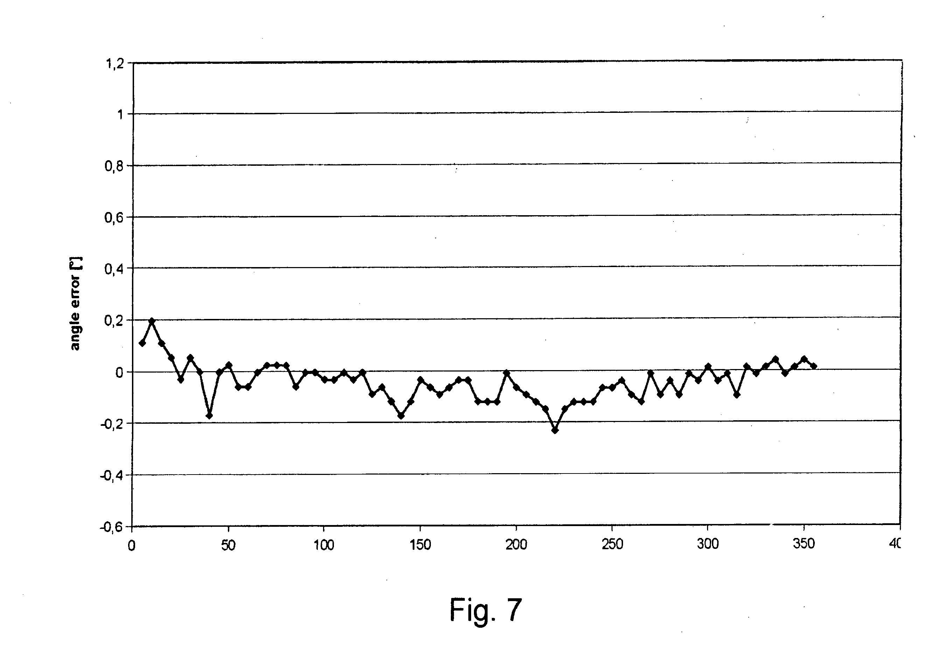

Nun werden die erste und zweite Magnetfeldkomponente gemessen und im Signalprozessor wird aus den Digitalsignalen für die erste und die zweite Magnetfeldkomponente mit Hilfe einer Arcus-Tangensfunktion der Winkel zwischen der Sensoranordnung 2 und dem Magnetfeld bzw. der magnetischen Drehachse bestimmt. Dabei können gegebenenfalls durch Temperaturschwankungen bedingte Änderungen der gemessenen Magnetfeldkomponenten mit Hilfe des von dem Temperatursensor 14 bereitgestellten Temperatursignal kompensiert werden. Die gemessenen Winkelwerte werden in Form eines Winkelmesssignals an einen Winkelsignalausgang 16 des Halbleiterchips ausgegeben. Durch einen Vergleich von Fig. 7 mit Fig. 5 wird deutlich, dass der Winkelfehler nun wesentlich kleiner ist als vor der Justierung.

## Patentansprüche

1. Winkelgeber (1) zur Bestimmung eines Winkels zwischen einer Sensoranordnung (2) und einem Magnetfeld, mit einem das Magnetfeld- erzeugenden, bezüglich einer Drehachse (5) in unterschiedliche Drehlagen relativ zu der Sensoranordnung (2) verstellbaren Magneten (3), wobei die Sensoranordnung (2) einen ersten Magnetfeldsensor (7) zur Erfassung einer quer zur Drehachse (5) orientierten ersten Magnetfeldkomponente und einen zweiten Magnetfeldsensor (8) zur Erfassung einer zweiten Magnetfeldkomponente aufweist, die quer zu einer von der Drehachse (5) und der ersten Magnetfeldkomponente aufgespannten Ebene angeordnet ist, **dadurch gekennzeichnet, dass** die Sensoranordnung (2) einen dritten Magnetfeldsensor (9) zur Erfassung einer in Richtung der Drehachse (5) orientierten dritten Magnetfeldkomponente aufweist.

2. Winkelgeber (1) nach Anspruch 1, **dadurch gekennzeichnet, dass** die Sensoranordnung (2) in ein Halbleitersubstrat (6) integriert ist, und dass der erste Magnelfeldsensor (7) und der zweite Magnetfeldsensor (8) jeweils mindestens eine vertikale, quer zur Ebene des Halbleitersubstrats (6) angeordnete Hall-Platte und der dritte Magnetfeldsensor (9) wenigstens eine parallel Ebene des Halbleitersubstrats (6) oder in der Ebene des Halbleitersubstrats (6) angeordnete horizontale Hall-Platte aufweist.

3. Winkelgeber (1) nach Anspruch 2, **dadurch gekennzeichnet, dass** der Flächenschwerpunkt der mindestens einen vertikalen Hall-Platte des ersten Magnetfeldsensors (7) mit dem Flächenschwerpunkt der mindestens einen vertikalen Hall-Platte des zweiten Magnetfeldsensors (8) übereinstimmt

4. Winkelgeber (1) nach Anspruch 2 oder 3, **dadurch gekennzeichnet, dass** de vertikale Hall-Platte des ersten Magnetfeldsensors (7) die vertikale Hall-Platte des zweiten Magnetfeldsensors (8) durchdringt.

5. Winkelgeber (1) nach einem der Ansprüche 2 bis 4, **dadurch gekennzeichnet, dass** in der Aufsicht auf die Erstreckungsebene des Halbleitersubstrats (6) der Flächenschwerpunkt der horizontalen Hall-Platte und der Flächenschwerpunkt der vertikalen Hall-Platte des ersten Magnetfeldsensors (7) und/oder zweiten Magnetfeldsensors (8) übereinander liegen.

6. Winkelgeber (1) nach einem der Ansprüche 1 bis 5, **dadurch gekennzeichnet, dass** der dritte Magnetfeldsensor (9) einen analogen Messsignalausgang für die dritte Magnetfeldkomponente aufweist, dass auf dem Halbleiterchip ein Temperatursensor (14) mit einem analogen Temperatursignalausgang angeordnet ist, und dass der Messsignalausgang und der Temperatursignalausgang über eine Schalteinrichtung (13) wechselweise mit einem Eingang eines Analog-Digital-Konverters verbindbar sind.

7. Winkelgeber (1) nach einem der Ansprüche 1 bis 6, **dadurch gekennzeichnet, dass** der Magnet (3) mittels einer Lagerung (4) relativ zu der Sensoranordnung (2) um die Drehachse (5) verdrehbar gelagert ist, und dass zwischen der Lagerung (4) und der Sensoranordnung (2) eine Verstellvorrichtung (17) angeordnet ist, mittels der die Drehachse (5) in Richtung der ersten Magneifeldkomponente und in Richtung der zweiten Magnetfeldkomponente relativ zu der Sensoranordnung (2) verstellbar ist.

8. Verfahren zur Bestimmung eines Winkels zwischen einer Sensoranordnung (2) und einem um eine Drehachse relativ zu der Sensoranordnung (2) verdrehbaren Magnetfeld, wobei die Sensoranordnung (2) bereitgestellt und das Magnetfeld erzeugt wird, wobei mit Hilfe der Sensoranordnung (2) ein erster Messwert für eine quer zur Drehachse orientierte erste Magnetfeldkomponente und einen zweiten Messwert zur Erfassung einer zweiten Magnetfeldkomponente aufweist die quer zu einer von der Drehachse und der ersten Magnetfeldkomponente aufgespannten Ebene angeordnet, und wobei mit Hilfe der Messwerte der Winkel zwischen der Sensoranordnung und dem Magnetfeld bestimmt wird, **dadurch gekennzeichnet**,
a) dass ein Messsignal für eine in Richtung der Drehachse orientierte dritte Magnetfeldkomponente in Abhängigkeit von der Drehlage erfasst wird,
b) dass die Schwankung des Messsignals ermittelt und mit einem Sollwert oder Sollwertbereich verglichen wird,
c) dass für den Fall, dass die Schwankung nicht mit dem Sollwert oder Sollwertbereich übereinstimmt,
i) die Sensoranordnung (2) quer zu der Drehachse relativ zu dem Magnetfeld verschoben wird,
ii) und danach die Schritte a) bis c) wiederholt werden,
d) und dass für den Fall, dass die Schwankung mit dem Sollwert oder Sollwertbereich übereinstimmt, der erste und der zweite Messwert erfasst und mit Hilfe der Messwerte der Winkel zwischen der Sensoranordnung (2) und dem Magnetfeld bestimmt wird.

9. Verfahren nach Anspruch 8, **dadurch gekennzeichnet**,
- dass für eine erste Relativposition zwischen der Drehachse und der Sensoranordnung (2) ein Messsignal für die dritte Magnetfeldkomponente in Abhängigkeit von der Drehlage erfasst und die Schwankung des ersten Messsignals ermittelt wird,
- dass die Sensoranordnung (2) in einer ersten Richtung relativ zu der Drehachse positioniert und in eine weitere Relativposition gebracht wird,
- dass für die weitere Relativposition ein weiteres Messsignal für die dritte Magnetfeldkomponente in Abhängigkeit von der Drehlage erfasst und die Schwankung dieses Messsignals ermittelt wird,
- dass die Änderung zwischen Schwankung des zuletzt erfassten Messsignals und der Schwankung des zuvor erfassten Messsignals bestimmt wird,
- dass die drei letzten Schritte solange wiederholt werden, bis die Änderung der Schwankung ihr Vorzeichen ändert oder gleich Null ist,
- und dass danach die Schritte a) bis d) derart durchgeführt werden, dass die Verschiebung in Schritt i) in einer zweiten Richtung erfolgt, die rechtwinklig zur ersten Richtung und rechtwinklig zu Drehachse orientiert ist.

10. Verfahren nach Anspruch 8 oder 9, **dadurch gekennzeichnet, dass** die erste Magnetfeldkomponente und die zweite Magnetfeldkomponente in einer normal zu Drehachse angeordneten Ebene liegen und rechtwinklig zueinander ausgerichtet sind.

## Claims

1. Angle transmitter (1) for determining an angle between a sensor arrangement 92) and a magnetic field, with a magnet (3) which generates the magnetic field and which is adjustable with respect to an axis (5) of rotation into different rotational positions relative to the sensor arrangement (2), wherein the sensor arrangement (2) comprises a first magnetic field sensor (7) for detecting a first magnetic field component oriented transversely to the axis (5) of rotation and a second magnetic field sensor (8) for detecting a second magnetic field component, which is arranged transversely to a plane spanned by the axis (5) of rotation and the first magnetic field component, **characterised in that** the sensor arrangement (2) comprises a third magnetic field sensor (9) for detecting a third magnetic field component oriented in the direction of the axis (5) of rotation.

2. Angle transmitter (1) according to claim 1, **characterised in that** the sensor arrangement (2) is integrated in a semiconductor substrate (6) and that the first magnetic field sensor (7) and the second magnetic field sensor (8) each comprise at least one vertical Hall plate arranged transversely to the plane of the semiconductor substrate (6) and the third magnetic field sensor (9) comprises at least one horizontal Hall plate arranged parallel to the plane of the semiconductor substrate (6) or in the plane of the semiconductor substrate (6).

3. Angle transmitter (1) according to claim 2, **characterised in that** the centre of area of the at least vertical Hall plate of the first magnetic field sensor (7) corresponds with the centre of area of the at least one vertical Hall plate of the second magnetic field sensor (8).

4. Angle transmitter (1) according to claim 2 or 3, **characterised in that** the vertical Hall plate of the first magnetic field sensor (7) penetrates the vertical Hall plate of the second magnetic field sensor (8).

5. Angle transmitter (1) according to any one of claims 2 to 4, **characterised in that** in plan view of the length plane of the semiconductor substrate (6) the centre of area of the horizontal Hall plate and the centre of area of the vertical Hall plate of the first magnetic field sensor (7) and/or second magnetic field sensor (8) lie one above the other.

6. Angle transmitter (1) according to any one of claims 1 to 5, **characterised in that** the third magnetic field sensor (9) has an analog measurement signal output for the third magnetic field component, that a temperature sensor (14) with an analog temperature signal output is arranged on the semiconductor chip and that the measurement signal output and the temperature signal output are connectible in alternation with an input of an analog-to-digital converter by way of a switching device (13).

7. Angle transmitter (1) according to any one of claims 1 to 6, **characterised in that** the magnet (3) is mounted by means of a mounting (4) to be rotatable relative to the sensor arrangement (2) about the axis (5) of rotation and that arranged between the mounting (4) and the sensor arrangement (2) is an adjusting device (17) by means of which the axis (5) of rotation is adjustable relative to the sensor arrangement (2) in the direction of the first magnetic field component and in the direction of the second magnetic field component.

8. Method of determining an angle between a sensor arrangement (2) and a magnetic field rotatable about an axis of rotation relative to the sensor arrangement (2), wherein the sensor arrangement (2) is provided and the magnetic field is generated, wherein with the help of the sensor arrangement (2) a first measurement value for a first magnetic field component oriented transversely to the axis of rotation and a second measurement value for detection of a second magnetic field component arranged transversely to a plane spanned by the axis of rotation and the first magnetic field component are provided, and wherein with the help of the measurement values the angle between the sensor arrangement and the magnetic field is determined, **characterised in that**:
a) a measurement signal for a third magnetic field component oriented in the direction of the axis of rotation is detected in dependence on the rotational position,
b) the fluctuation of the measurement signal is determined and compared with a target value or a target value range,
c) for the case that the fluctuation does not correspond with the target value or target value range,
i) the sensor arrangement (2) is displaced transversely to the axis of rotation relative to the magnetic field and
ii) thereafter the steps a) to c) are repeated,
d) and for the case that the fluctuation corresponds with the target value or target value range the first and second measurement values are detected and the angle between the sensor arrangement (2) and the magnetic field is determined with the help of the measurement values.

9. Method according to claim 8, **characterised in that**
- for a first relative position between the axis of rotation and the sensor arrangement (2) a measurement signal for the third magnetic field component is detected in dependence on the rotational position and the fluctuation of the first measurement signal is determined,
- the sensor arrangement (2) is positioned in a first direction relative to the axis of rotation and brought into a further relative position,
- for the further relative position a further measurement signal for the third magnetic field component is detected in dependence on the rotational position and the fluctuation of this measurement signal is determined,
- the change between fluctuation of the last detected measurement signal and the fluctuation of the previously detected measurement signal is determined,
- the three last steps are repeated until the change in the fluctuation changes its sign or is equal to zero and
- thereafter the steps a) to d) are carried out in such a way that the displacement in step i) takes place in a second direction oriented at right angles to the first direction and at right angles to the axis of rotation.

10. Method according to claim 8 or 9, **characterised in that** the first magnetic field component and the second magnetic field component lie in a plane arranged normal to the axis of rotation and are oriented at right angles to one another.

## Revendications

1. Capteur angulaire (1) pour la détermination d'un angle entre un agencement de capteurs (2) et un champ magnétique, avec un aimant (3) produisant le champ magnétique et déplaçable par rapport à un axe de rotation (5) dans des positions angulaires différentes par rapport à l'agencement de capteurs (2), dans lequel l'agencement de capteurs (2) comporte un premier détecteur de champ magnétique (7) pour détecter une première composante de champ magnétique orientée transversalement à l'axe de rotation (5) et un deuxième détecteur de champ magnétique (8) pour détecter une deuxième composante de champ magnétique, qui est disposée transversalement à un plan défini par l'axe de rotation (5) et la première composante de champ magnétique, **caractérisé en ce que** l'agencement de capteurs (2) comporte un troisième détecteur de champ magnétique (9) pour détecter une troisième composante de champ magnétique orientée dans la direction de l'axe de rotation (5).

2. Capteur angulaire (1) selon la revendication 1, **caractérisé en ce que** l'agencement de capteurs (2) est intégré dans un substrat semi-conducteur (6) et **en ce que** le premier détecteur de champ magnétique (7) et le deuxième détecteur de champ magnétique (8) présentent respectivement au moins une plaque de Hall verticale disposée transversalement au plan du substrat semi-conducteur (6) et le troisième détecteur de champ magnétique (9) présente au moins une plaque de Hall horizontale disposée parallèlement au plan du substrat semi-conducteur (6) ou dans le plan du substrat semi-conducteur (6).

3. Capteur angulaire (1) selon la revendication 2, **caractérisé en ce que** le centre de gravité de surface de ladite au moins une plaque de Hall verticale du premier détecteur de champ magnétique (7) coïncide avec le centre de gravité de surface de ladite au moins une plaque de Hall verticale du deuxième détecteur de champ magnétique (8).

4. Capteur angulaire (1) selon la revendication 2 ou 3, **caractérisé en ce que** la plaque de Hall verticale du premier détecteur de champ magnétique (7) traverse la plaque de Hall verticale du deuxième capteur de champ magnétique (8).

5. Capteur angulaire (1) selon l'une quelconque des revendications 2 à 4, **caractérisé en ce que**, dans la vue du plan d'extension du substrat semi-conducteur (6), le centre de gravité de surface de la plaque de Hall horizontale et le centre de gravité de surface de la plaque de Hall verticale du premier détecteur de champ magnétique (7) et/ou du deuxième détecteur de champ magnétique (8) sont situés l'un au-dessus de l'autre.

6. Capteur angulaire (1) selon l'une quelconque des revendications 1 à 5, **caractérisé en ce que** le troisième détecteur de champ magnétique (9) présente une sortie de signal de mesure analogique pour la troisième composante de champ magnétique, **en ce qu'**un détecteur de température (14) avec une sortie de signal de mesure de température analogique est disposé sur la puce semi-conductrice et **en ce que** la sortie de signal de mesure et la sortie de signal de température peuvent être reliées en alternance à une entrée de convertisseur analogique-numérique au moyen d'un dispositif de commutation (13).

7. Capteur angulaire (1) selon l'une quelconque des revendications 1 à 6, **caractérisé en ce que** l'aimant (3) est monté de façon rotative autour de l'axe de rotation (5) par rapport à l'agencement de capteurs (2) au moyen d'un appui (4) et **en ce qu'**un dispositif de déplacement (17) est disposé entre l'appui (4) et l'agencement de capteurs (2), au moyen duquel l'axe de rotation (5) peut être déplacé par rapport à l'agencement de capteurs (2) dans la direction de la première composante de champ magnétique et dans la direction de la deuxième composante de champ magnétique.

8. Procédé de détermination d'un angle entre un agencement de capteurs (2) et un champ magnétique pouvant tourner autour d'un axe de rotation par rapport à l'agencement de capteurs (2), dans lequel on prépare l'agencement de capteurs (2) et on produit le champ magnétique, ledit procédé présentant, à l'aide de l'agencement de capteurs (2), une première valeur de mesure pour une première composante de champ magnétique orientée transversalement à l'axe de rotation et une deuxième valeur de mesure pour détecter une deuxième composante de champ magnétique, qui est disposée transversalement à un plan défini par l'axe de rotation et la première composante de champ magnétique, et dans lequel on détermine à l'aide des valeurs de mesure l'angle entre l'agencement de capteurs et le champ magnétique, **caractérisé en ce que**
a) on détecte un signal de mesure pour une troisième composante de champ magnétique orientée dans la direction de l'axe de rotation en fonction de la position de rotation,
b) on détermine la fluctuation du signal de mesure et on la compare avec une valeur de consigne ou une plage de valeurs de consigne,
c) dans le cas où la fluctuation ne coïncide pas avec la valeur de consigne ou la plage de valeurs de consigne:
i) on déplace l'agencement de capteurs (2) transversalement à l'axe de rotation par rapport au champ magnétique,
ii) et on répète ensuite les étapes a) à c),
d) et dans le cas où la fluctuation coïncide avec la valeur de consigne ou la plage de valeurs de consigne, on détecte la première et la deuxième valeurs de mesure et on détermine à l'aide des valeurs de mesure l'angle entre l'agencement de capteurs (2) et le champ magnétique.

9. Procédé selon la revendication 8, **caractérisé en ce que**
- on détecte, pour une première position relative entre l'axe de rotation et l'agencement de capteurs (2), un signal de mesure pour la troisième composante de champ magnétique en fonction de la position de rotation et on détermine la fluctuation du premier signal de mesure,
- on positionne l'agencement de capteurs (2) dans une première direction par rapport à l'axe de rotation et on l'amène dans une autre position relative,
- on détecte pour l'autre position relative un autre signal de mesure pour la troisième composante de champ magnétique en fonction de la position de rotation et on détermine la fluctuation de ce signal de mesure,
- on détermine la variation entre la fluctuation du signal de mesure détecté en dernier lieu et la fluctuation du signal de mesure détecté auparavant,
- on répète les trois dernières étapes, jusqu'à ce que la variation de la fluctuation change de signe ou soit nulle, et
- on exécute ensuite les étapes a) à d) d'une manière telle que le déplacement à l'étape i) soit effectué dans une deuxième direction, qui est orientée perpendiculairement à la première direction et perpendiculairement à l'axe de rotation.

10. Procédé selon la revendication 8 ou 9, **caractérisé en ce que** la première composante de champ magnétique et la deuxième composante de champ magnétique sont situées dans un plan disposé normalement par rapport à l'axe de rotation et sont orientées perpendiculairement l'une par rapport à l'autre.
